# EUROPEAN PATENT SPECIFICATION

(11) **EP 2 675 853 B1**
(45) Date of publication and mention of the grant of the patent: **14.09.2016**
(21) Application number: 12707188.4
(22) Date of filing: 15.02.2012
(51) Int. Cl.: C09D 5/00

(54) **THERMOCHROMIC COATINGS WITH RESIN VEHICLE**
THERMOCHROME BESCHICHTUNGEN MIT HARZVEHIKEL
REVÊTEMENTS THERMOCHROMIQUES CONTENANT UN VÉHICULE RÉSINE

(30) Priority: 15.02.2011 US 201161443170 P
(43) Date of publication of application: 25.12.2013
(73) Proprietor: Chromatic Technologies, Inc., Colorado Springs, CO 80907 (US)
(72) Inventor: OWEN, Timothy, J., Colorado Springs, CO 80916 (US); FLETCHER, Kristin, A., Colorado Springs, CO 80907 (US)
(74) Representative: Kador & Partner
(86) International application number: PCT/US2012/025322
(87) International publication number: WO 2012/112729

(56) References cited:
- EP-A1- 0 357 844
- WO-A2-2007/120855
- KR-B1- 920 010 717
- US-A1- 2003 008 774
- US-A1- 2009 143 516

## Description

### RELATED APPLICATIONS

This application claims benefit of priority to provisional application serial no. 61/443,170 filed February 15, 2011.

### BACKGROUND

Thermochromic encapsulated dyes undergo a color change over a specific temperature range. By way of example, a dye may change from a particular color at low temperature to colorless at a high temperature, such as red at 85°F and colorless at above 90°F. The color change temperature is controllable, such that the color-change can take place at different temperatures. In one example, the color change may occur at a temperature just below a person's external body temperature so that a color change occurs in response to a human touch. For those skilled in the art of thermochromic microcapsule synthesis, the precise control of the temperatures at which color changes occur is easily achievable. For example, the ideal temperature of color change for cool beverages may range from 0°C to 15°C, while the ideal temperature change for a warm or hot beverage may lie between 40°C and 65°C.

Thermochromic systems consist of three main components: an electron donating chromophore, an electron-accepting color developer and a non-polar solvent that facilitates color change over a specified temperature range. The properties of thermochromic systems have been exploited for more than 35 years. One technique used to produce the thermochromic encapsulated dye is to combine water, dye, developer, oil, with urea-formaldehyde or melamine-formaldehyde resin and agitate to create a very fine emulsification. Interfacial tensions are such that the oil, dye and developer end up on the inside of a urea-formaldehyde or melamine-formaldehyde capsule distributed primarily throughout the water phase. The urea-formaldehyde or melamine-formaldehyde substance, while very hard and resistant to breakdown at high temperature, is permeable. Though there has been significant improvement in microencapsulation technology, thermochromic systems still have inherent chemical instability in polar solvent-based systems. For this reason, microencapsulated thermochromic pigments have found limited applicability in solvent-based systems. For example United States Patent No. 6,139,779 describes how low molecular weight solvents (generally less than 100 g/mol) have been shown to permeate the relatively thin microcapsule wall and destroy the thermochromic system. A variety of thermochromic inks may be purchased on commercial order, for example, from Chromatic Technologies, Inc. of Colorado Springs, Colorado.

United States Patents 4,421,560 and 4,425,161 entitled "Thermochromic Materials" both state that thermochromic inks can be made with "conventional additives used to improve conventional printing inks." Nonetheless, there are concerns over what additives may be added to these inks.

Thermochromic dye is often sold in a slurry of pigment formed of encapsulated dye in a water base. It happens that the pH of this slurry is most often neutral in a range from 6.5 to 7.5. When thermochromic dye is added to a formulation that has a pH outside this range, the color change properties are often lost. This can be an irreversible effect and, therefore, it is important to adjust the pH prior to adding the thermochromic dye.

Several types of ingredients are traditionally added to ink formulations. The combination of all the ingredients in an ink, other than the pigment, is called the vehicle. The vehicle carries the pigment to the substrate and binds the pigment to the substrate. The correct combination of vehicle ingredients will result in the wetting of a pigment. This wetting means that the vehicle forms an absorbed film around the pigment particles. The main ingredient in an ink is the binder. This may be a resin, lacquer or varnish or some other polymer. The binder characteristics vary depending on the type of printing that is being done and the desired final product. The second main ingredient is the colorant itself, for example, as described above. The remaining ingredients are added to enhance the color and printing characteristics of the binder and the colorant. These remaining ingredients may include reducers (solvents), waxes, surfactant, thickeners, driers, and/or UV inhibitors.

Plain lids of the type used in beverage cans are stamped from a coil of aluminum, typically alloy 5182-H48, and transferred to another press that converts the stamped materials into easy-open ends. The conversion press forms an integral rivet button in the lid and scores the opening, while concurrently forming the tabs in another die from a separate strip of aluminum. The tab is pushed over the button, which is then flattened to form the rivet that attaches the tab to the lid. The top rim of the can is trimmed and pressed inward or "necked" to form a taper conical where the can will later be filled and the lid (usually made of an aluminum alloy with magnesium) attached. The lid components, especially the tabs, may be coated before they are subjected to such manufacturing processes as riveting can ends, tabs, caps or closures.

Three piece beverage cans are usually filled before the top is crimped in place. The filling and sealing operations are fast and precise. The filling head centers over the can and discharges the beverage to flow down the sides of the can. The lid is placed on the can then crimped in two operations. A seaming head engages the lid from above while a seaming roller to the side curls the edge of the lid around the edge of the can body. The head and roller spin the can in a complete circle to seal all the way around. A pressure roller next drives the two edges together under pressure to make a gas-tight seal. Filled cans usually have pressurized gas inside, which stiffens the filled cans for subsequent handling.

Thermochromic inks have been used successfully as indicators of a preferred usage temperature and as a brand differentiator. Specifically, thermochromic inks have been used as cold indicators on aluminum cans, via metal decorating inks, to communicate optimum consumption temperature to the consumer. This interactivity through thermochromic color change so far does not extend to coating on can ends, tabs, caps and closures. To date, no such coatings are commercially available. In part, this is due to significant mechanical forces that are applied to precoated coil stock to form can ends, tabs, caps and other closures. Because of the stress and sheer during the tooling process the coating must be flexible and resistant to cracking, flaking, and other damage. In addition, the coating must be sufficiently chemically resistant to be unaffected by pasteurization or other processes. In order to meet the above requirements, the reversible thermochromic coating described herein must contain a thermochromic pigment, a formulated vehicle system and/or a commercially-available coating commonly used for can and coil coatings. In order to engineer additional coating properties, for example, chemical resistance or flexibility, components such as a curing agent, an accelerator or catalyst to enhance curing, or wax may be added. Furthermore, thermochromic microcapsule wetting agents may be incorporated to aid pigment dispersion, and one or more solvents may be selected. United States patent application 2003/0127415 A1 describes the use of thermochromic inks to apply printable images to metal lids and caps. United States Patent Application 2011/0226636 A1 describes the use of thermochromic inks as applied in multiple ways to aluminum can ends, the displaceable tear panel and the non-detachable tab. While these disclosures describe the application of thermochromic inks, they do not teach practical means of achieving the claims described. Conventional thermochromic inks are generally unsuited for the manufacturing stresses involved in making the can ends and tabs which, practically speaking, are made from aluminum rolls commonly known as coil stock that must be coated prior to the machining operations that form the can ends, tabs, caps and other closures. Because of the durability and chemical stability of epoxy coatings, these are commonly applied to aluminum and metal cans where direct or indirect food contact may occur. The prior art does not, however, provide detailed formulations for a reversible thermochromic epoxy-based, or other resin systems, for use in can ends, tabs, caps or closures. Reversible thermochromic coating is known, for example, for use in different applications. US 2009/0143516 A1 describes coating a latex glove, WO 2007/120855 A2 describes coating a cast, US 2003/0008774 A1 describes coating a laminate and KR 920 010717 B1 describes coating a cloth.

It is problematic that existing thermochromic coatings fail to withstand the stresses of these manufacturing operations which may, for example, excessively thin or scratch the coatings or crush the microcapsules forming the thermochromic pigment.

### SUMMARY

The presently disclosed instrumentalities overcome the problems outlined above and advance the art by providing reversible thermochromic can and coil coatings to fabricate can ends, tabs, caps and/or closures using aluminum or steel alloys. Furthermore, the inventors have discovered processes in the manufacture of the thermochromic microcapsule as well as processing conditions when making the coating that enhance the solvent stability of the thermochromic pigment.

The use of thermochromic systems as a substitute for conventional pigments in resin based coatings creates an interactive effect which can provide an indicator or purely artistic effect. In addition to the visual appeal of thermochromic can ends, tabs, caps and closures, they have also a functional purpose indicating the internal temperature of the beverage within the can as, for example, the pigment changes from colorless to colored or from one color to a different color.

According to the invention, a thermochromic coating may include a pigment and a vehicle. In one aspect, the pigment is present in an amount ranging from 1% to 40% of the coating by weight, and the vehicle forms the balance of from 99% to 60% by weight. The pigment may be provided in a slurry form having various liquid content, so for consistency the weight of pigment is assessed using pigment that is completely dry. For example, pigment that is provided in a water-based slurry would be assessed after elimination of the water, although it is not strictly necessary to eliminate the water when mixing all formulations.

The pigment includes thermochromic microcapsules. These are usually urea-formaldehyde or melamine-formaldehyde resins encapsulating a core that contains a thermochromic system including a thermochromic dye (such as a leuco dye), a developer and a solvent that controls the color activation temperature of the dye and developer. Other thermochromic systems are known to the art. Methods of forming thermochromic capsules with predetermined activation temperatures are well known in the art. The pigment may also contain dyes or solids that impart color and are not thermochromic in nature.

The vehicle contains a polymerizable resin that contains the pigment and may be, for example, epoxy, polyester, urethane, acrylic acid and acrylate. These may incorporate curing agents as are known in the art, such as primary, secondary, tertiary, and cyclic aliphatic amines, blocked amines (e.g. Hycat), amino resins with a range of alkylation, aromatic amines, polyamines, polyamides, amidoamines, ketimines, melamine resins, isocyanates or resins that can be cured using ultraviolet radiation. Surfactants or other dispersing agents may facilitate dispersion of the pigment in the vehicle. The dispersing agents may suitably include, for example, nonionic, anionic, cationic, or zwitterionic surfactants, polymers or copolymers, or reactive diluents such as aliphatic or cycloaliphatic glycidyl ethers. Nonpolar alkane or aromatic solvents, polar, aprotic solvents such as esters, ketones, amides or polar, protic solvents such as alcohols or acids may be added for rheological control.

**In one embodiment, a thermochromic coating formulation includes:**

| **Ingredient** | **Weight Percent of Coating** |
|---|---|
| **Pigment*** | 1% to 40% |
| **Vehicle** | |
| Polymerizable resin | 5% to 30% |
| Dispersing agent | 0% to 5% |
| Solvent | 0% to 50% |
| Curing agent | 0% to 25% |
| Wax | 0% to 5% |

| | |
|---|---|
| *Assessed by solids content upon complete drying of pigment capsules, but does not need to be dried and may be mixed as a slurry. | |

In one aspect, a reversible thermochromic coating for use in can and coil coatings contains a reversible thermochromic pigment in an amount from 1% to 40% by weight of the coating, and a vehicle forming the balance of the coating. According to the invention, the vehicle includes a resin selected from the group consisting of epoxy, polyester, urethane, acrylic acid and acrylate resins, and combinations thereof. Commercially available thermochromic pigments may be readily obtained in a variety of colors demonstrating color transition temperatures from about 5 °C and up to about 65 °C. A range of color formulations may be made by mixing the pigment to include one or more of the following reversible thermochromic colors: yellow, magenta, cyan, and black. These may be further mixed to include other dyes or solid pigments that are non-thermochromic in nature. The pigment may change from a colorless state to a colored state upon cooling to the reactive temperature, or to a colored state upon heating to the reactive temperature. It is preferred that the microcapsules are formed of urea-formaldehyde or melamine-formaldehyde that is acid catalyzed to enhance the inherent stability in polar, low molecular weight solvents having a molecular weight of about less than 100 g/mol.

When premised using a nonpolar solvent, the coatings can demonstrate shelf stability exceeding 14 or 45 days when stored at about 20°C. Some coating formulations demonstrate shelf stability in excess of one year.

The curing agent is generally compatible with the resin for this purpose and may be, for example, a latent blocked amine to initiate a polymerization reaction upon heating.

The coating is preferably roller-coated onto coil stock aluminum or steel and the roll stock aluminum is subsequently formed into one or more beverage can components. These components may be selected from the group consisting of beverage can ends, beverage can tabs, bottle caps, and/or beverage container closures. The aluminum is preferably an alloy that is commonly used in canning operations, such as aluminum alloy 5182-H48. The coating process preferably occurs in one or more coats to yield a dried film with a thickness ranging from 1 mg/in² up to 5.5 mg/in².

### BRIEF DESCRIPTION OF THE FIGURES

Figure 1 compares beverage cans with ends that are coated with a thermochromic coating according to the present disclosure and chilled to different temperatures corresponding to Fig. 1A and Fig. 1B.
Fig. 2 shows a beverage can lid having a pull tab with a thermochromic coating.
Fig. 3 shows a process of applying the coating to make thermochromically functional aluminum that can be used to fabricate thermochromically functional beverage can components.

### DESCRIPTION OF THE PREFERRED EMBODIMENTS

Thermochromic ink coatings contain, in combination, a vehicle and a pigment including thermochromic microcapsules. The thermochromic microcapsules are, according to the invention, present in an amount ranging from 1% to 50% of the coating by weight on a sliding scale. The vehicle contains a solvent that is preferably present in an amount ranging from 25% to 75% by weight of the coating.

### Pigment

Careful preparation of encapsulated reversible thermochromic material enhances coating stability in the presence of low molecular weight polar solvents that are known to adversely affect thermochromic behavior. One skilled in the art of microencapsulation can utilize well-known processes to enhance the stability of the microcapsule. For example, it is understood that increasing the cross linking density will reduce the permeability of the capsule wall, and so also reduces the deleterious effects of low molecular weight polar solvents. It is also commonly understood that, under certain conditions, weak acids with a pKₐ greater than about 2 may catalyze microcapsule wall polymerization and increase the resulting cross linking density. It is presently the case that using formic acid as a catalyst enhances solvent stability of blue thermochromic microcapsules in the presence of low molecular weight ketones, diols, and aldehydes at room temperature. Further, it is well understood that increasing the diameter of the thermochromic microcapsule can result in enhanced solvent stability.

The selection of material for use as the nonpolar solvent for the thermochromic dye and color developer that is encapsulated within the thermochromic pigment determines the temperature at which color change is observed. For example, changing the solvent from a single component to a two-component solvent system can shift the temperature at which full color is perceived almost 7°C from just under 19°C to 12°C. The present disclosure shows how to apply this knowledge in preparing resin-based vehicle coatings for use in can and coil coatings with full color temperatures, i.e., the temperature at which maximum color intensity is observed, as low as -5°C and as high as 65°C. No adverse effects on the physical properties of the resulting coating were observed as the full color temperature was changed over the above temperature range by the use of different straight chain alkyl esters, alcohols, ketones or amides.

Thermochromic materials including encapsulated thermochromic systems with a variety of color properties may be purchased on commercial order from such companies as Chromatic Technologies, Inc., of Colorado Springs, Colorado.

Control over observed color intensity is demonstrated in several ways, generally by presenting providing increased amounts of pigment. For a typical coating, material thickness ranges from 1 mg/in² to 6 mg/in². Very intense color is observed for coatings with thickness greater than about 3 mg/in². Increasing thermochromic pigment solids can also result in a more intense observed color even when coating thickness is decreased. However, dried film properties such as flexibility and toughness may be compromised if too much thermochromic pigment is incorporated. The optimal range of thermochromic pigment solids is within 5 to 40% by weight of the coating.

### Vehicle

Physical properties of the finished coating can be significantly affected by the selection of resin to be used. When no resin is used in formulating a reversible thermochromic coating, a matte finish is achieved that is able to be formed into can ends, tabs, caps and/or other closures. While this result may be desired, the inclusion of a low viscosity, relatively low molecular weight resin, monomer, oligomer, polymer, or combination thereof, can enhance gloss and affect other physical film properties such as hardness, flexibility and chemical resistance. The resin is designed to supplement the total solids deposited on the substrate, thus impacting the physical properties of the dried film. Any resin material, monomer, oligomer, polymer, or combination thereof, that can be polymerized into the commercially-available can and coil coating material is suitable for inclusion in the formulation of the current reversible thermochromic can and coil coating. Acceptable classes of resins include, but are not limited to, epoxy, polyester, urethane, acrylic acid and acrylate, or other types of resin systems with suitably high solids content.

Final coating properties such as chemical resistance, hardness and flexibility can be manipulated by selection of cross linkers or curing agents. Materials that readily react with and incorporate into the selected resin system is suitable for inclusion as a cross linker or curing agent. Examples include, but are not limited to, primary, secondary, tertiary, and cyclic aliphatic amines, blocked amines, amino resins with a range of alkylation, aromatic amines, polyamines, polyamides, amidoamines, ketimines, melamine resins, isocyanates or resins that can be cured using ultraviolet radiation. Care should be taken to balance reactivity needs with pot life / shelf life. For example, if the curing agent reacts too quickly with the resin, the reversible thermochromic coating may cure before the coating can be applied to the aluminum or steel substrate.

In order to ensure the reversible thermochromic coating fully cures before the coil is re-wound, accelerators and/or catalysts may be added to the coating formulation. Examples of suitable materials for use as cure accelerators or catalysts include, but are not limited to, imidazoles, amidoamines, linear phenolics, blocked and unblocked acid catalysts, isocyanates, dihydrazides or photoinitiators.

Coating properties can also be manipulated with the inclusion of natural or synthetic waxes. For example, carnuba, polytetrafluoroethylene (PTFE), or a combination thereof may be included to affect physical film properties such as slip, coefficient of friction and abrasion resistance.

Adequate dispersion of thermochromic pigment throughout the resin is an aspect of achieving high quality coatings for commercial use. The inclusion of additional molecular or polymeric dispersing aids, such as nonionic, anionic, cationic or zwitterionic surfactants, polymers or copolymers, can ensure adequate dispersion. Active diluents, in addition to reacting with the resin selected, may also function as a dispersing aid. Furthermore, active diluents can reduce the coating viscosity and affect film flexibility and impact resistance. Suitable materials to be included as an active diluent include, but are not limited to, aliphatic or cycloaliphatic glycidyl ethers, monofunctional and polyfunctional glycidyl ethers.

Final adjustments to coating rheology may be made by the addition of select reducers, or solvents. A reversible thermochromic coating can be adjusted to meet rheological criteria established for use in a roller coating application. Many solvents are available for this purpose. Care should be exercised to select solvents most compatible with thermochromic pigment systems. Nonpolar solvents or solvents of low polarity are preferred. However, modifications to thermochromic pigment preparation initiated by the inventors as well as the different coating preparations available to the inventors increased the solvent options available to include low molecular weight polar solvents such as esters, for example butyl carbitol acetate, low molecular weight alcohols such as ethanol or butanol, or ketones such as acetone.

The chemical stability and shelf life of the reversible thermochromic coating may be enhanced in various ways. In one aspect, this involves separating the thermochromic pigment from organic solvents. A two-part coating system containing thermochromic pigment and resin in Part A and commercially-available coating material and other solvents in Part B is then mixed immediately prior to coating aluminum or steel alloys. The shelf life of the fully mixed coating material ranges from several days to many months depending on the identity of the other components selected.

For those situations for which a two-part solution is not preferable, stability can be balanced with convenience by preparing a one-part reversible thermochromic coating. In this case, careful selection of formulation components is paramount. The use of water-based commercially-available can and coil coating material enhances the shelf life stability by minimizing the amount of organic solvents in contact with the thermochromic pigment system. In one example, coating degradation was observed within 14 days when red thermochromic coatings were prepared using butyl carbitol acetate and stored at room temperature. Enhanced stability was observed when formulation components were modified as well as when stability enhanced thermochromic pigment systems were used.

The nonlimiting embodiments that follow teach by way of example and should not be construed as unduly limiting the scope of this disclosure.

### EXAMPLE 1-Two Part Coating

Part A (30% by weight of coating)
   Thermochromic pigment (any color)*
Part B (70% by weight of coating)
   Clear Coating (an epoxy coating available from Watson Standard of Pittsburgh, Pennsylvania)
* This material may be purchased on commercial order from Chromatic Technologies, Inc. of Colorado Springs Colorado, and may include for example S5BOXX3105W, a blue thermochromic slurry that goes from a colored to colorless state when the temperature exceeds 31 °C.

### EXAMPLE 2 - Two Part Coating

Part A (60% by weight of coating)
   45% Thermochromic Pigment (any color)*
   50% Epoxy resin (for example Epon 863 available from Lawter of LaVergne, Tennessee)
   3.3% Dispersing aid (for example Disperbyk 2025 available from Byk of Wallingford, Connecticut)
   1.7% Curing agent (for example Ancamine 2458 available from Air Products of Allentown, Pennsylvania)
Part B (40% by weight of coating)
   85% Clear Coating (an epoxy coating available from Watson Standard of Pittsburgh, Pennsylvania)
   15% Solvent to reduce viscosity (for example, butyl carbitol acetate available from Lawter of LaVergne, Tennessee)
* This material may be purchased on commercial order from Chromatic Technologies, Inc. of Colorado Springs Colorado, and may include for example S5BOXX3105W, a blue thermochromic slurry that goes from a colored to colorless state when the temperature exceeds 31°C.

### EXAMPLE 3 One Part Coating

20% (w/w) Thermochromic Pigment (any color)*
13% Polyester resin (for example, Decotherm 290 available from Lawter of LaVergne, Tennessee)
0.5% (w/w) Dispersing aid (for example, Byk 370 available from Byk of Wallingford, Connecticut)
7% (w/w) Curing agent 1 (for example, Cymel 328 available from Cytec Industries of Woodland Park, New Jersey)
1.5% (w/w) Curing agent 2 (for example, imidazole available from Aldrich of St. Louis, Missouri)
2% (w/w) Wax (for example, Fluoron 735 available from Lawter of LaVergne, Tennessee)
30% (w/w) Solvent (for example, ethyl-3-ethoxypropionate available from Univar of Redmond, Washington)
26% (w/w) Clear Coating (an epoxy coating available from Watson Standard of Pittsburgh, Pennsylvania)

### EXAMPLE 4 One Part Coating

15% (w/w) Thermochromic Pigment (any color)*
10% (w/w) Resin (for example, Epon 896 available from Lawter of LaVergne, Tennessee)
1.5% (w/w) Dispersing aid (for example, Disperbyk 112 available from Byk of Wallingford, Connecticut)
0.5% (w/w) Curing agent 1 (for example, Nacure 2500 available from King Industries of Norwalk, Connecticut)
4% (w/w) Curing agent 2 (for example, Cymel 325 available from Cytec Industries of Woodland Park, New Jersey)
1.5% (w/w) Wax - 0.5 wt % (for example, Ultrapoly 211 A available from Lawter of LaVergne, Tennessee)
5% (w/w) Solvent 1 (for example, Heloxy Modifier 62 available from Lawter of LaVergne, Tennessee)
21.5% (w/w) solvent 2 (for example, ethyl-3-ethoxypropionate available from Univar of Redmond, Washington)
41% (w/w) Clear Coating (an epoxy coating available from Watson Standard of Pittsburgh, Pennsylvania)

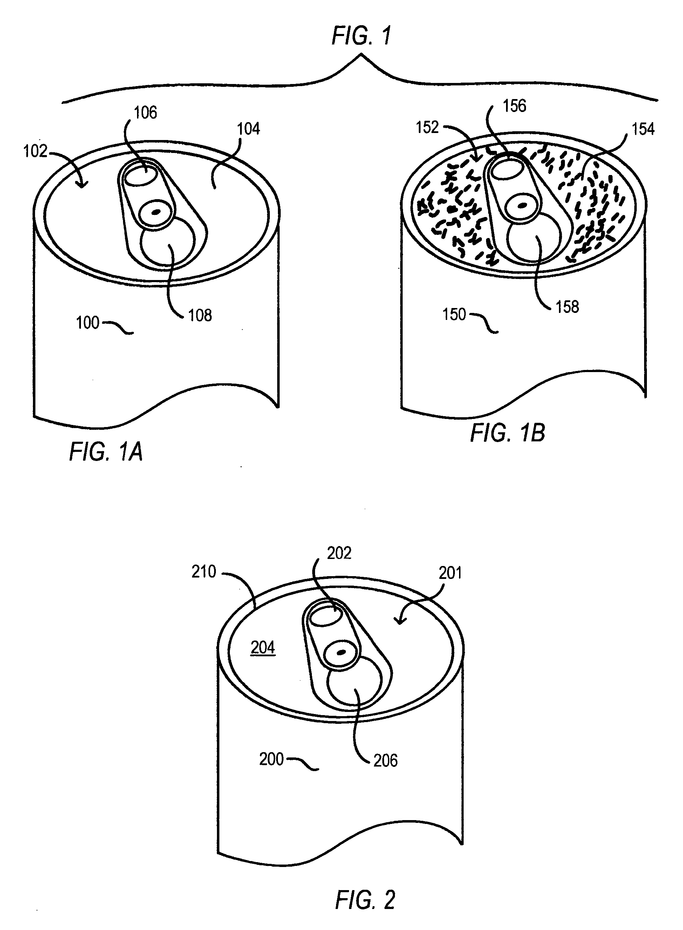

Fig. 1 compares the lids of identical beverage cans 100 (Fig. 1A), and 150 (Fig. 1 B). The cans 100, 150 , differ in that can 100 is at room temperature and can 150 is chilled to a preferred temperature for human consumption of a beverage inside can 150. Lids 102, 152 are coated with epoxy-based thermochromic coatings 104, 154. The relative darkness of lid 152 compared to lid 102 indicates that a beverage (not shown) within can 150 is sufficiently chilled to a recommended temperature for improved palatability. As is known in the art, the lids 102, 152 contain tabs 106, 156 that may be pulled to open access to space within the interior walls of cans 100, 150, such that liquid or other matter may be poured into or out of the cans through closures 108, 158 that are scored to rupture when the tabs 106, 156 are lifted.

As opposed to placing thermochromic ink on the entire lid, it is possible to coat selected elements of the can lid, such as the just the tab, just the closure, or both the lid and the tab without coating the closure. This is shown for example in Fig. 2 where can 200 has a tab 202 that is covered with a thermochromic coating as described above. The same coating or one having a different color and/or color transition temperature may be selectively applied to any feature of lid 201, such as surface 204, closure 206, an indented area 208 surrounding closure 206, and/or rim 210.

Fig. 2 shows a beverage can 200 with a pull tab 202 that has been covered with the coating of any of Examples 1 through 4. The tab 202 is manufactured from coil stock that is precoated with any of the coatings described above before the tab is formed.

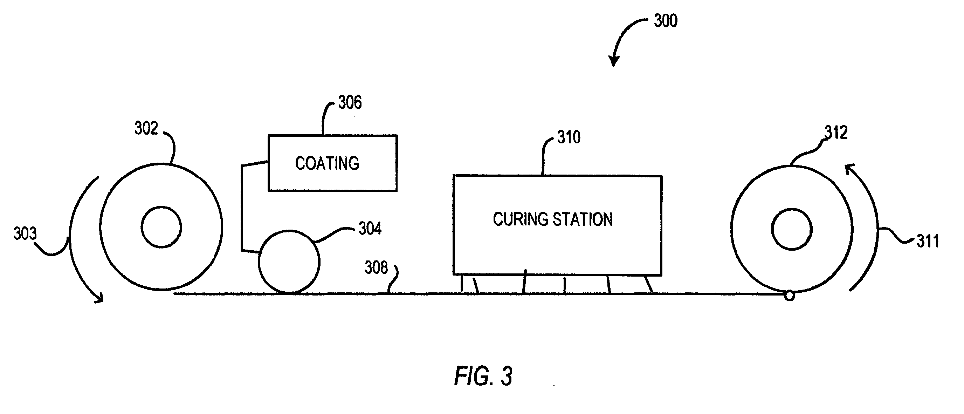

Fig. 3 is a process diagram that shows sequential processing steps 300 for applying the thermochromic coating to coil stock of aluminum 302. As the sheet aluminum unwinds 303 from roll 302, a roller coater 304 receives an uncured thermochromic coating material 306, as described above. This places a liquid coating or film 308 on the aluminum. This film is cured, for example by the application of heat or ultraviolet radiation, at curing station 310, and the sheet 309 including the dried film 309 is coiled 311 onto roll 312. This roll 312 may then be used to make beverage can components as discussed in context of Figs. 1 and 2. It will be appreciated that additional coating operations (not shown) may be performed on sheet 309.

Those skilled in the art will appreciate that the various embodiments described herein teach by way of example and not by limitation. These embodiments may be subjected to insubstantial changes without departing from the true scope and spirit of the invention. Accordingly, the inventors hereby state their intention to rely upon the Doctrine of Equivalents in protecting their rights in what is claimed.

## Claims

1. A reversible thermochromic coating comprising,
a reversible thermochromic pigment including thermochromic microcapsules which encapsulate a core that contains a thermochromic system including a thermochromic dye, a developer, and a solvent,
said reversible thermochromic pigment in an amount ranging from 1% to 50% by weight of said reversible thermochromic coating, and
a vehicle forming the balance of the coating,
said vehicle including a resin selected from the group consisting of epoxy, polyester, urethane, acrylic acid and acrylate resins, and combinations thereof,
wherein said reversible thermochromic coating coats coil stock aluminum or steel.

2. The reversible thermochromic coating of claim 1, wherein said reversible thermochromic coating coats said coil stock aluminum to yield a dried film with a thickness ranging from 1 mg/in2 up to 5.5 mg/in2.

3. The reversible thermochromic coating of claim 1, wherein said coil stock aluminum or steel is subsequently formed into one or more beverage can components.

4. The reversible thermochromic coating of claim 3, wherein said beverage can components are selected from the group consisting of beverage can ends, beverage can tabs, bottle caps, and beverage container closures.

5. The reversible thermochromic coating of claim 3, wherein said beverage can component comprises a beverage can tab.

6. The reversible thermochromic coating of claim 1, wherein said coating is roller-coated onto coil stock aluminum or steel.

7. The reversible thermochromic coating of claim 1, wherein said thermochromic microcapsules achieve color change between a temperature of about -5 °C and up to about 65 °C.

8. The reversible thermochromic coating of claim 1, wherein said thermochromic microcapsules change from a colorless state to a colored state upon cooling to a reactive temperature.

9. The reversible thermochromic coating of claim 1, wherein said thermochromic dye comprises a leuco dye.

10. The reversible thermochromic coating of claim 1, further comprising a curing agent which facilitates curing of said resin.

11. The reversible thermochromic coating of claim 1, further comprising a conventional pigment or colored coating material.

12. The reversible thermochromic coating of claim 1, wherein said resin is epoxy.

## Patentansprüche

1. Reversible thermochrome Beschichtung, umfassend
ein reversibles thermochromes Pigment, das thermochrome Mikrokapseln umfasst, die einen Kern einkapseln, der ein thermochromes System enthält, welches einen thermochromen Farbstoff, einen Entwickler und ein Lösungsmittel umfasst,
das reversible thermochrome Pigment mit einer Menge, die von 1 Gew.-% bis 50 Gew.-% der reversiblen thermochromen Beschichtung reicht, und ein Vehikel, das den Ausgleich der Beschichtung bildet,
wobei das Vehikel ein Harz umfasst, das aus der Gruppe ausgewählt ist, die aus Epoxy-, Polyester-, Urethan-, Acrylsäure- und Acrylat-Harzen und Kombinationen davon besteht,
wobei die reversible thermochrome Beschichtung Bandmaterialaluminium oder -stahl beschichtet.

2. Reversible thermochrome Beschichtung nach Anspruch 1, wobei die reversible thermochrome Beschichtung Bandmaterialaluminium beschichtet, um einen getrockneten Film mit einer Dicke, die von 1 mg/in² bis 5,5 mg/in² reicht, zu ergeben.

3. Reversible thermochrome Beschichtung nach Anspruch 1, wobei das Bandmaterialaluminium oder der Bandmaterialstahl anschließend zu einem oder mehreren Getränkedosenbestandteilen geformt wird.

4. Reversible thermochrome Beschichtung nach Anspruch 3, wobei die Getränkedosenbestandteile aus der Gruppe ausgewählt sind, bestehend aus Getränkedosenenden, Getränkedosenlaschen, Flaschenverschlüssen und Getränkebehälterverschlüssen.

5. Reversible thermochrome Beschichtung nach Anspruch 3, wobei der Getränkedosenbestandteil eine Getränkedosenlasche umfasst.

6. Reversible thermochrome Beschichtung nach Anspruch 1, wobei die Beschichtung auf das Bandmaterialaluminium oder den Bandmaterialstahl mittels Walzenbeschichtung geschichtet ist.

7. Reversible thermochrome Beschichtung nach Anspruch 1, wobei die thermochromen Mikrokapseln zwischen einer Temperatur von etwa -5 °C und bis zu etwa 65 °C eine Farbveränderung erreichen.

8. Reversible thermochrome Beschichtung nach Anspruch 1, wobei sich die thermochromen Mikrokapseln nach einem Abkühlen auf eine reaktive Temperatur von einem farblosen Zustand zu einem farbigen Zustand verändern.

9. Reversible thermochrome Beschichtung nach Anspruch 1, wobei der thermochrome Farbstoff einen Leukofarbstoff umfasst.

10. Reversible thermochrome Beschichtung nach Anspruch 1, die ferner ein Härtemittel umfasst, das das Aushärten von dem Harz fördert.

11. Reversible thermochrome Beschichtung nach Anspruch 1, die ferner ein herkömmliches Pigment oder farbiges Beschichtungsmaterial umfasst.

12. Reversible thermochrome Beschichtung nach Anspruch 1, wobei das Harz Epoxy ist.

## Revendications

1. Revêtement thermochromique réversible comprenant,
un pigment thermochromique réversible incluant des microcapsules thermochromiques qui encapsulent un coeur qui contient un système thermochromique incluant un colorant thermochromique, un révélateur et un solvant,
ledit pigment thermochromique réversible étant en une quantité située dans la plage de 1 % à 50 % en poids dudit revêtement thermochromique réversible, et
un véhicule formant le reste du revêtement,
ledit véhicule incluant une résine choisie dans le groupe constitué des résines époxyde, polyester, uréthane, acide acrylique et acrylate, et des combinaisons de celles-ci,
ledit revêtement thermochromique réversible recouvrant un aluminium ou un acier en rouleaux.

2. Revêtement thermochromique réversible selon la revendication 1, ledit revêtement thermochromique réversible recouvrant ledit aluminium en rouleaux pour donner un film séché ayant une épaisseur située dans la plage de 1 mg/pouce² à 5,5 mg/pouce².

3. Revêtement thermochromique réversible selon la revendication 1, dans lequel ledit aluminium ou acier en rouleaux est ensuite mis sous la forme d'un ou plusieurs composants de canette.

4. Revêtement thermochromique réversible selon la revendication 3, dans lequel lesdits composants de canette sont choisis dans le groupe constitué des couvercles de canette, des anneaux de canette, des capsules pour bouteille et des fermetures de récipient de boisson.

5. Revêtement thermochromique réversible selon la revendication 3, dans lequel ledit composant de canette comprend un anneau de canette.

6. Revêtement thermochromique réversible selon la revendication 1, dans lequel ledit revêtement est appliqué au rouleau sur l'aluminium ou l'acier en rouleaux.

7. Revêtement thermochromique réversible selon la revendication 1, dans lequel lesdites microcapsules thermochromiques présentent un changement de coloration entre une température d'environ -5 °C et une température maximale d'environ 65 °C.

8. Revêtement thermochromique réversible selon la revendication 1, dans lequel lesdites microcapsules thermochromiques passent d'un état incolore à un état coloré en refroidissant à une température réactive.

9. Revêtement thermochromique réversible selon la revendication 1, dans lequel ledit colorant thermochromique comprend un colorant leuco.

10. Revêtement thermochromique réversible selon la revendication 1, comprenant en outre un agent de durcissement qui facilite le durcissement de ladite résine.

11. Revêtement thermochromique réversible selon la revendication 1, comprenant en outre un pigment classique ou un matériau de revêtement coloré.

12. Revêtement thermochromique réversible selon la revendication 1, dans lequel ladite résine est une résine époxyde.
